# EUROPEAN PATENT SPECIFICATION

(11) **EP 3 436 648 B1**
(45) Date of publication and mention of the grant of the patent: **04.06.2025**
(21) Application number: 17773396.1
(22) Date of filing: 27.03.2017
(51) Int. Cl.: E04C 1/42, E04F 11/18, E04H 17/16, C03C 27/00

(54) **STRUCTURAL BONDING SYSTEM**
STRUKTURVERBINDUNGSSYSTEM
SYSTÈME DE LIAISON DE STRUCTURE

(30) Priority: 30.03.2016 NZ 16718477
(43) Date of publication of application: 06.02.2019
(73) Proprietor: Glass Systems Limited, Avondale 1026 (NZ)
(72) Inventor: CLEPHANE, David Anthony, Christchurch 8062 (NZ)
(74) Representative: Range, Christopher William
(86) International application number: PCT/IB2017/051725
(87) International publication number: WO 2017/168298

(56) References cited:
- EP-A1- 0 404 103
- EP-A1- 0 404 103
- WO-A2-2007/038518
- DE-U1- 202006 004 389
- US-A- 2 115 513
- US-A1- 2006 287 408
- US-A1- 2006 287 408
- US-B1- 7 497 057

## Description

### Technical Field

The present invention relates to a system and method of installing structural components in a building, especially structural components made of glass.

### Background

Any discussion of the prior art is not an admission that such art forms part of the common general knowledge in the field.

As used herein, the term "building" includes a structural part of a building.

Glass has traditionally been used in buildings as a window material. Glass panes can be secured into frames made of wood or metal (e.g. aluminium) by means including the use of putty, elastomeric seals, and silicone sealant compounds. The window usually engages with the frame around its entire periphery, to prevent point stresses which might cause the glass to shatter under pressure.

Glass can also be used for structural components of a building, such as glass walls, balustrades, or roofing systems.

One method by which structural glass components can be secured to the underlying structure of the building is by making holes in the glass, passing fastening means such as bolts through the holes, to engage with the structure and hold the glass in place. Drilling toughened or reinforced glass to make the holes can be difficult and time consuming. Holes can be made in the raw annealed glass before tempering, but this then prevents any later amendments to the design. The mounting system is constrained by the potential location of the holes.

To overcome the difficulties with hole-based mounting systems, non-penetrative clamping systems have been designed, such as the "Glass Vice" system described in NZ 556329. This disclosed the use of clamp jaws defining an elongate slot for receiving an edge of a panel, a base, and fasteners, acting together to clamp the panel to hold it in the slot.

When glass is chosen as a building material, this indicates that a high degree of visibility is desired. Mounting systems are therefore designed to minimise their visual impact. This was recognised in NZ 596115, which describes a non-penetrative fastening system for mounting a panel to a side of the structure such that at least a portion of the panel extends above a top surface of the structure.

Silicone sealants are available for structural applications, such as Dow Corning^{®} 121 Structural Glazing Sealant, which is a two-part silicone formulation designed specifically for use in structural glazing applications in field and factory applications. Once catalysed, the material cures into a medium-modulus, flexible silicone rubber that is flexible for use in structural and weatherseal applications. However, a general warranty of suitability for such applications is not provided; instead, a project specific structural adhesive warranty will only be issued after an application has been reviewed by technical staff at Dow Corning Corporation.

Before a silicone sealant can be used, the surface of the glass must be carefully prepared by cleaning all joints, removing all foreign matter and contaminants such as grease, oil, dust, water, frost, and surface dirt. This can be difficult to achieve on a building site, so that it is sometimes necessary to pre-bond the glass off-site in a sterile, enclosed, environment.

US 2006/287408 A1 (Baikerikar) discloses a protective coating for window glass. It teaches in paragraphs [0003] and [0005] that enamels are typically ceramic based and require firing temperatures of about 500°C to 700°C to cure, and what is needed is a coating for glass which can be applied without the need for very high curing temperatures. Baikerikar discloses providing a film that adheres to glass by polymerization, so as to avoid the need for a high temperature step. It discloses the application of such a film to a windscreen for a vehicle. It is an object of the present invention to provide a structural bonding system that will overcome one or more of the deficiencies with the existing systems described above, and/or provide the public with a useful choice.

### Disclosure of Invention

Therefore the present invention provides a method of bonding a tempered structural component to a building as set out in claim 1.

In a preferred embodiment, the attachment zone constitutes at least 22% of the total surface area of one side of the structural component.

Preferably the bonding sealant is applied to at least 90% of the attachment zone.

In a preferred embodiment, the structural component is made of glass. Preferably the tempering step is carried out to 90 mega-pascals (MPa). More preferably the tempering step is carried out to 130 to 160 MPa.

Preferably the building engagement face is steel; more preferably a 10 millimetre (mm) thick steel plate. Alternatively, the building engagement face may be glass, timber, concrete, or a composite material.

The present invention further provides for the combination of a tempered structural component including an attachment zone and a bonding sealant as set out in claim 9.

### Brief Description of the Drawings

By way of non-limiting example only, a preferred embodiment of the invention is described in detail below with reference to the accompanying drawings, in which:
Figure 1 is a plan view of a preparatory stage of a structural component according to the present invention;
Figure 2 is a side view of a structural component bonded to a building according to the present invention; and
Figures 3a & 3b are side views of alternative embodiments of a building bonded to a structural component according to the present invention.

### Best Method of Performing the Invention

A preferred embodiment of the present invention is described with reference to the accompanying drawings as a system of bonding a glass balustrade on to a horizontal part a building, such as a balcony or mezzanine floor, to create a structure which is fully compliant with the New Zealand Building Code clause for Structure, B1.

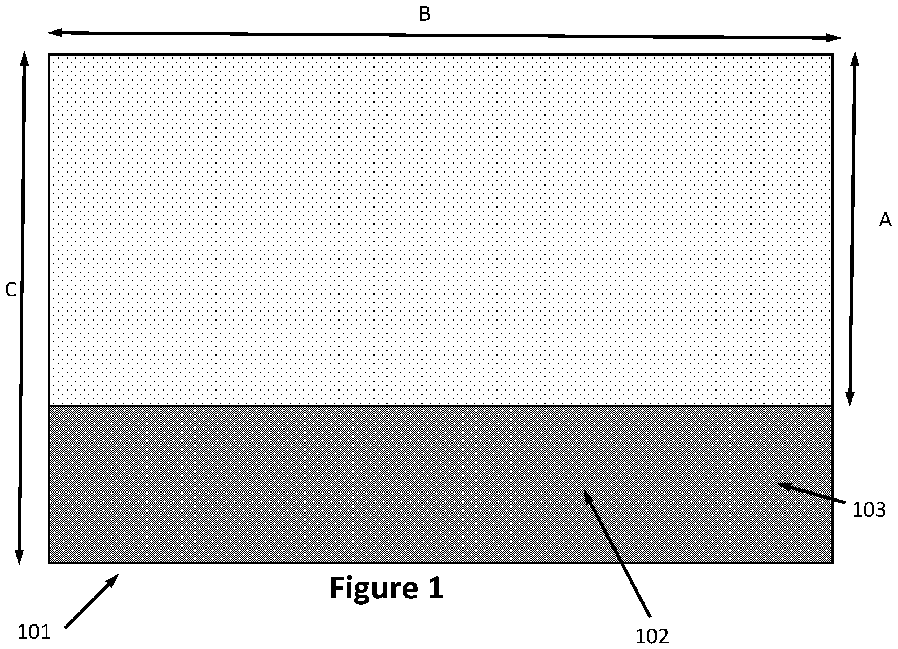

A glass balustrade is designed to extend a functional height A above the floor level of a part of a building, such as a balcony or mezzanine floor. The balustrade is to extend from the edge of the floor along a length B. As shown in Figure 1, a piece of annealed glass 101 (preferably 15 mm thick) is prepared for the designed shape of the balustrade, having a length B, and a glass height C. In this preferred embodiment, glass height C is at least 22% greater than functional height A.

An attachment zone 102 of the annealed glass 101 is the area of glass which will be below the functional height A of the annealed glass 101, as shown in Figure 1. In this preferred embodiment, attachment zone 102 constitutes at least 22% of the total area of annealed glass 101. It is believed an attachment zone constituting as little as 10% of the total surface area may be sufficient for the present system.

A frit 103 is then applied to the entire attachment zone 102 of the annealed glass 101. The colour of the frit may be selected for aesthetic effect, or multiple colours may be used to print a design, but the whole attachment zone 102 must be covered. Glasshape^{®}'s DIP SPECTRUM^{™} inks, which provide a glass enamel primarily consisting of SiO₂, ZnO, B₂O₂, Na₂O and BiO₂, have been found to work well for this purpose.

Utilising the method of the present invention, it is not necessary to make any holes in annealed glass 101 for securing the glass to the building. However, as will be apparent to one skilled in the art, the annealed glass 101 may also be prepared so as to engage with other components, such as hand rails, which may optionally be selected to be attached to the finished balustrade, according to other design factors.

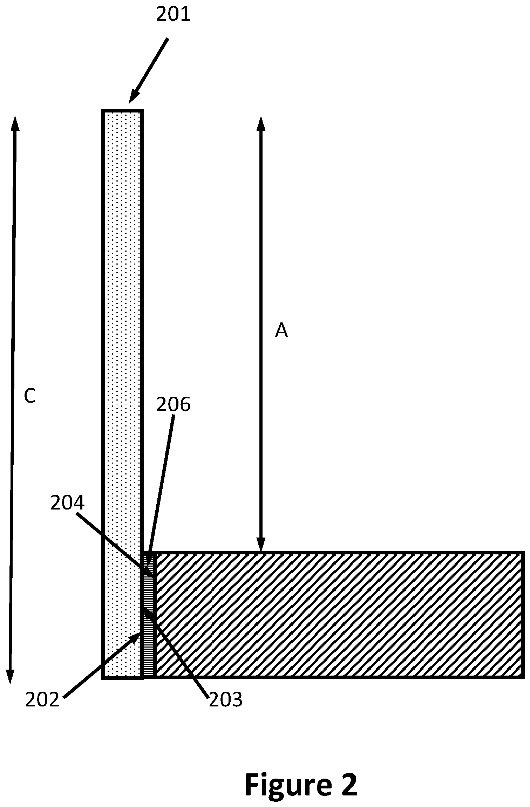

After the frit 103 has been applied, the annealed glass 101 is tempered. The glass is heated to about 615°C (degrees Celcius), then rapidly cooled by forced air flow. This strengthens the glass and makes it about 4 to 5 times stronger than normal glass. For use as a balustrade, the annealed glass 101 should be tempered to 160 MPa (rather than the standard 90 MPa), to become tempered glass 201, shown in Figure 2.

During the tempering process, the frit 103 becomes bonded to tempered glass 201, to form a frit engagement face 203 throughout attachment zone 202.

The building needs to include a building engagement face 204, which must be at least coextensive with attachment zone 202.

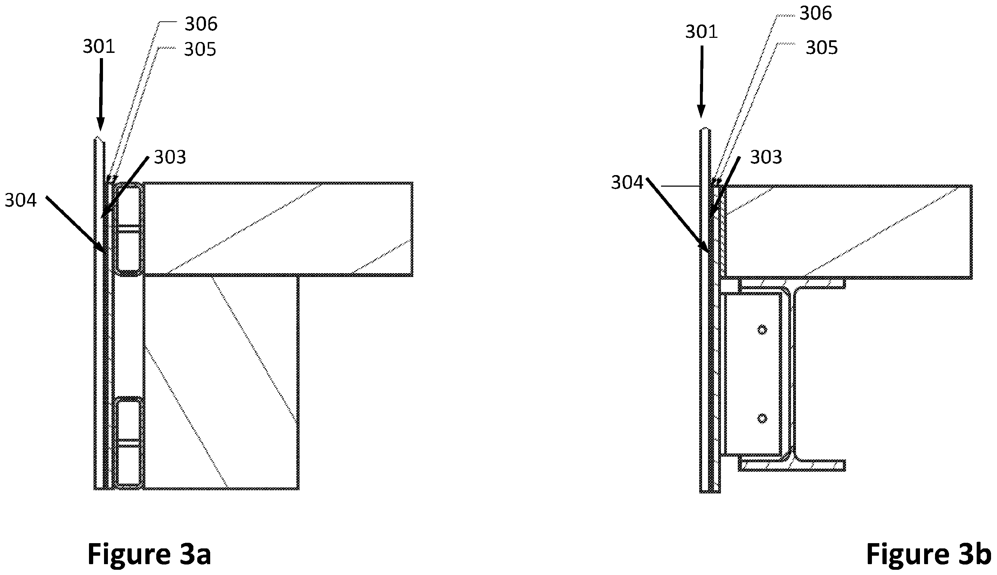

In trials, a 10 mm thick plate of G250 steel (a galvanised mild steel with a minimum yield strength of 250 MPa) has been found to provide an appropriate building engagement face 204. Optional embodiments shown in Figures 3a and 3b show two ways of mounting a steel plate 305 on the building, to provide a building engagement face 304 for bonding to the frit engagement face 303 of tempered glass 301 using bonding sealant 306. The mounting means for steel plate 305 shown in Figures 3a and 3b are examples only, and one skilled in the art would be aware of other ways in which an appropriate building engagement face 204 could be provided.

In this example, building engagement face 204 is steel. However, another substrate such as glass, timber, concrete, or a composite material, could be used to provide an appropriate building engagement face 204.

The tempered glass 201 is brought to the building site and prepared for bonding. Both the frit engagement face 203 and the building engagement face 204 are cleaned, but it has surprisingly been found that, unlike conventional sealing methods, it is not necessary to remove all foreign matter and contaminants, such as grease, oil, dust, water, frost, surface dirt etc before bonding using the present system.

In this preferred embodiment, a bonding sealant 206 is a structural glazing sealant. Bonding sealant 206 is prepared, and is placed to substantially cover the frit engagement face 203, which is then brought into position so that bonding sealant 206 is held between frit engagement face 203 and building engagement face 204, substantially filling the space between them. Standard clamping or support means can then be used to hold frit engagement face 203 and building engagement face 204 in their respective positions adjacent bonding sealant 206 until bonding sealant 206 has cured.

Unlike traditional bonding methods, which require engagement of multiple edges of the glass panel, it has surprisingly been found that bonding across substantially all of the frit engagement face 203 creates a sufficiently strong engagement between the tempered glass panel 201 and the building engagement face 204 that a balustrade constructed according to the preferred embodiment would meet the requirements for a C5 barrier, suitable for use in crowd loaded situations.

The present embodiment provides for an unobstructed view through tempered glass panel 201 for the entire height A above the building structure. In alternative embodiments, handrails may be included, or a digital print or other decorative feature may cover part or all of the panel. The frit can also be selected to meet an aesthetic requirement, and because the bonding area is the frit engagement area, the means of attachment of the tempered glass panel 201 to the building engagement face cannot be seen.

## Claims

1. A method of bonding a tempered structural component (101) to a building,
including the steps of:
(i) receiving a tempered structural component (101) including an attachment zone (102), wherein the attachment zone (102) has been prepared according to a method including the step of:
applying a frit (103) to the attachment zone (102);
(ii) providing a building engagement face (204) at least coextensive with the attachment zone (102) of the structural component (101);
(iii) applying a bonding sealant (206) to a majority of at least one of the attachment zone (102) or the building engagement face (204); and
(iv) engaging the bonding sealant (206) with the other of the attachment zone (102) or the building engagement face (204)
the method of preparing the attachment zone (102) includes, after the step of applying the frit (103), the step of:
tempering the structural component (101) so as to bond the frit (103) to the structural component (101),
**characterised in that**
the attachment zone (102) constitutes at least 10% of the total surface area of one side of the structural component (101); and
**in that** the attachment zone (102) is substantially across one edge of the structural component (101).

2. The method according to claim 1, wherein the attachment zone (102) constitutes at least 22% of the total surface area of one side of the structural component (101).

3. The method according to either one of claims 1 or 2, wherein the bonding sealant (206) is applied to at least 90% of the attachment zone (102).

4. The method according to any one of the preceding claims, wherein the structural component (101) is made of glass.

5. The method according to any one of the preceding claims, wherein the tempering step is carried out to 90 MPa.

6. The method according to claims 1 to 4, wherein the tempering step is carried out to 130 to 160 MPa.

7. The method according to any one of claims 1 to 6, wherein the building engagement face (204) is made of a material selected from the list consisting of: steel, glass, timber, concrete, and a composite material.

8. The method according to claim 7, wherein the building engagement face (204) is a 10 mm thick steel plate.

9. The combination of:
(i) a tempered structural component (101) for a building, said tempered structural component (101) including an attachment zone (102) comprising an applied frit (103) bondable by tempering said structural component (101) ; and
(ii) a bonding sealant (206) for bonding the attachment zone (103) to a building engagement face (204) of the building,
**characterised in that**
the attachment zone (102) constitutes at least 10% of the total surface area of one side of the structural component (101); and
**in that** the attachment zone (102) is substantially across one edge of the structural component (101).

## Patentansprüche

1. Verfahren zum Verbinden einer gehärteten Strukturkomponente (101) mit einem Gebäude, einschließlich die Schritte von:
(i) Aufnehmen einer gehärteten Strukturkomponente (101) einschließlich einer Befestigungszone (102), wobei die Befestigungszone (102) nach einem Verfahren vorbereitet wurde, das den Schritt einschließt von:
Aufbringen einer Fritte (103) auf die Befestigungszone (102);
(ii) Bereitstellen einer Gebäudeeingriffsfläche (204), die sich zumindest mit der Befestigungszone (102) der Strukturkomponente (101) deckt;
(iii) Aufbringen eines Verbindungsdichtmittels (206) auf einen Großteil von zumindest einer von der Befestigungszone (102) oder der Gebäudeeingriffsfläche (204); und
(iv) Ineinandergreifen des Verbindungsdichtmittels (206) mit der anderen von der Befestigungszone (102) oder der Gebäudeeingriffsfläche (204)
wobei das Verfahren zum Vorbereiten der Befestigungszone (102) nach dem Schritt des Aufbringens der Fritte (103) den Schritt einschließt von:
Tempern der Strukturkomponente (101), um die Fritte (103) mit der Strukturkomponente (101) zu verbinden,
**dadurch gekennzeichnet, dass**
die Befestigungszone (102) zumindest 10 % des Gesamtoberflächenbereichs einer Seite der Strukturkomponente (101) ausmacht; und
dadurch, dass
die Befestigungszone (102) sich im Wesentlichen über eine Kante der Strukturkomponente (101) erstreckt.

2. Verfahren nach Anspruch 1, wobei die Befestigungszone (102) zumindest 22 % des Gesamtoberflächenbereichs einer Seite der Strukturkomponente (101) ausmacht.

3. Verfahren nach einem der Ansprüche 1 oder 2, wobei das Verbindungsdichtmittel (206) auf zumindest 90 % der Befestigungszone (102) aufgebracht wird.

4. Verfahren nach einem der vorstehenden Ansprüche, wobei die Strukturkomponente (101) aus Glas hergestellt ist.

5. Verfahren nach einem der vorstehenden Ansprüche, wobei der Temper-Schritt auf 90 MPa durchgeführt wird.

6. Verfahren nach einem der Ansprüche 1 bis 4, wobei der Temper-Schritt auf 130 bis 160 MPa durchgeführt wird.

7. Verfahren nach einem der Ansprüche 1 bis 6, wobei die Gebäudeeingriffsfläche (204) aus einem Material hergestellt ist, das aus der Liste ausgewählt ist, die aus Folgendem besteht: Stahl, Glas, Holz, Beton und einem Verbundmaterial.

8. Verfahren nach Anspruch 7, wobei die Gebäudeeingriffsfläche (204) eine 10 mm dicke Stahlplatte ist.

9. Kombination aus:
(i) einer gehärteten Strukturkomponente (101) für ein Gebäude, wobei die gehärtete Strukturkomponente (101) eine Befestigungszone (102) einschließt, die eine aufgebrachte Fritte (103) umfasst, die durch Tempern der Strukturkomponente (101) verbunden werden kann; und
(ii) einem Verbindungsdichtmittel (206) zum Verbinden der Befestigungszone (103) mit einer Gebäudeeingriffsfläche (204) des Gebäudes
**dadurch gekennzeichnet, dass**
die Befestigungszone (102) zumindest 10 % des Gesamtoberflächenbereichs einer Seite der Strukturkomponente (101) ausmacht; und
dadurch, dass
die Befestigungszone (102) sich im Wesentlichen über eine Kante der Strukturkomponente (101) erstreckt.

## Revendications

1. Procédé de liaison d'un composant (101) de structure trempé à un bâtiment, incluant les étapes suivantes :
(i) la réception d'un composant (101) de structure trempé incluant une zone de fixation (102), dans lequel la zone de fixation (102) a été préparée selon un procédé incluant l'étape suivante :
l'application d'une fritte (103) sur la zone de fixation (102) ;
(ii) la fourniture d'une face (204) de mise en prise de bâtiment au moins coextensive à la zone de fixation (102) du composant (101) de structure ;
(iii) l'application d'un matériau d'étanchéité de liaison (206) sur une majeure partie d'au moins une parmi la zone de fixation (102) ou la face (204) de mise en prise de bâtiment ; et
(iv) la mise en prise du matériau d'étanchéité de liaison (206) avec l'autre parmi la zone de fixation (102) ou la face (204) de mise en prise de bâtiment
le procédé de préparation de la zone de fixation (102) inclut, après l'étape d'application de la fritte (103), l'étape suivante :
la trempe du composant (101) de structure de manière à lier la fritte (103) au composant (101) de structure,
**caractérisé en ce que**
la zone de fixation (102) constitue au moins 10 % de la surface totale d'un côté du composant (101) de structure ; et
**en ce que**
la zone de fixation (102) s'étend sensiblement sur un bord du composant (101) de structure.

2. Procédé selon la revendication 1, dans lequel la zone de fixation (102) constitue au moins 22 % de la surface totale d'un côté du composant (101) de structure.

3. Procédé selon l'une quelconque des revendications 1 ou 2, dans lequel le matériau d'étanchéité de liaison (206) est appliqué sur au moins 90 % de la zone de fixation (102).

4. Procédé selon l'une quelconque des revendications précédentes, dans lequel le composant (101) de structure est en verre.

5. Procédé selon l'une quelconque des revendications précédentes, dans lequel l'étape de trempe est réalisée à 90 MPa.

6. Procédé selon les revendications 1 à 4, dans lequel l'étape de trempe est réalisée à 130 à 160 MPa.

7. Procédé selon l'une quelconque des revendications 1 à 6, dans lequel la face (204) de mise en prise de bâtiment est faite d'un matériau sélectionné dans la liste consistant en : un acier, un verre, un bois, un béton et un matériau composite.

8. Procédé selon la revendication 7, dans lequel la face (204) de mise en prise de bâtiment est une plaque d'acier de 10 mm d'épaisseur.

9. Combinaison de :
(i) un composant (101) de structure trempé pour un bâtiment, ledit composant (101) de structure trempé incluant une zone de fixation (102) comprenant une fritte (103) appliquée pouvant être liée par la trempe dudit composant (101) de structure ; et
(ii) un matériau d'étanchéité de liaison (206) pour lier la zone de fixation (103) à une face (204) de mise en prise de bâtiment
**caractérisée en ce que**
la zone de fixation (102) constitue au moins 10 % de la surface totale d'un côté du composant (101) de structure ; et
**en ce que**
la zone de fixation (102) s'étend sensiblement sur un bord du composant (101) de structure.
